# EUROPEAN PATENT SPECIFICATION

(11) **EP 4 580 954 B1**
(45) Date of publication and mention of the grant of the patent: **18.03.2026**
(21) Application number: 23744393.2
(22) Date of filing: 12.07.2023
(51) Int. Cl.: B65D 1/32, A23L 29/10, B32B 27/32, B65D 51/24, B65D 85/72

(54) **PACKAGED OIL-IN-WATER EMULSIFIED FOOD COMPOSITION**
VERPACKTE ÖL-IN-WASSER EMULGIERTE LEBENSMITTELZUSAMMENSETZUNG
COMPOSITION ALIMENTAIRE ÉMULSIFIÉE HUILE DANS L'EAU EMBALLÉE

(30) Priority: 01.09.2022 EP 22193494
(43) Date of publication of application: 09.07.2025
(73) Proprietor: Unilever IP Holdings B.V., 6708 WH Wageningen (NL)
(72) Inventor: SASSEN, Cornelis, Laurentius, 6708 WH Wageningen (NL); LIESHOUT, Maarten, Hendrik, Johan, 6708 WH Wageningen (NL)
(74) Representative: Keenan, Robert Daniel
(86) International application number: PCT/EP2023/069378
(87) International publication number: WO 2024/046639

(56) References cited:
- EP-B1- 3 686 118
- WO-A1-2021/069205
- JP-A- 2017 019 562
- US-A1- 2017 361 983
- US-B2- 10 611 531
- US-B2- 7 874 466

## Description

The present invention relates to the use of polypropylene in a container of the tottle type, comprising an oil-in-water emulsified food composition.

### Background

Oil-in-water-emulsified food compositions such as mayonnaise, savoury sauces or salad dressings can be conveniently packaged in a tottle-type of bottle. A "tottle", a word commonly known in the packaged food industry, is a bottle type, often used for ketchup, mayonnaise or sauces, etc, can be positioned on the cap (so-called "top down" or "upside down" bottle) . While a "bottle" sits on its "bottom" and has a cap at the top, a "tottle" sits on its "top," which is also the cap. The consumer may describe this type of bottle as an "upside-down bottle".

Tottles containing an oil-in-water emulsified food composition such as mayonnaise or a mayonnaise-like sauce, are known. A problem that is observed in the industry and by the consumer is that the food composition sticks to the inner wall of the tottle. To collect the sauce stuck to the inner wall, the consumer may swing the tottle or hammer it on the table, in an attempt to sweep the stuck material towards the spout. It is understandably frustrating that a significant part of the tottle content cannot be consumed, or only after frustrating effort.

Several attempts have been undertaken by the industry to reduce this problem. For example, it was recognized by the industry that coating of the inner wall of the tottle with vegetable oil facilitates discharge of mayonnaise from the tottle. As known in the industry, mayonnaise uses egg yolk as emulsifier to stably disperse the oil droplets within the continuous water phase of the emulsion. An oil-coated tottle containing mayonnaise wherein the emulsifier is yolk that has been modified with enzyme, thereby enhancing its emulsifying properties, faced severe complications regarding product discharge, when used in the oil-coated tottle.

WO2016/102158 A1 describes a specific coating composition to overcome this problem related to emulsions wherein enzyme-modified egg yolk is used as emulsifier. The emulsified product is not in contact anymore with the bottle wall, but with the coating, thereby facilitating discharge. Efficient discharge of an emulsified product from a tottle is not a straight-forward exercise, and depends on the specific product ingredients and their interaction with the bottle surface.

It was recognized by many consumers and by the present inventors, that the problem of product discharge is even more significant if the tottle comprises a mayonnaise-like sauce that uses a vegan emulsifier such as plant protein or octenyl succinic anhydride (OSA)-modified starch. Coating of the inner wall of the tottle using vegetable oil or using oil comprising compounds as used in WO 2016/102158 A1 did not result in acceptable discharge improvement and/or in significant and unacceptable separation of oil from the emulsion.

US 10,611,531 B discloses a liquid dispenser for dispensing liquid from an inverted container. The dispenser includes a body adapted for releasably engaging to the container, a valve localized in the body and defining a dispensing orifice that reacts to pressure differences for dispensing liquid to the exterior atmosphere, and an impact resistance system.

The challenge therefore remained in the industry how to facilitate product discharge from a tottle that contains an oil-in-water emulsified food composition wherein a plant protein or OSA-modified starch is used as emulsifier.

### Summary of the invention

Surprisingly, the solution for this specific problem was found in the use of a tottle comprising polypropylene (PP). Typically, tottles for application in packaging of mayonnaise-like dressings are prepared from polyethylene terephthalate (PET), polyethylene (PE) or polypropylene (PP), wherein PET is increasing in popularity. The inner wall may be coated, as described above. To the best knowledge of the inventors, the use of polypropylene in a tottle to overcome the problem of emulsion sticking to the inner wall of the tottle is not known.

The invention therefore relates to the use of polypropylene in a tottle type container containing an oil-in-water-emulsified food composition comprising:
- vegetable oil,
- water,
- emulsifier comprising octenyl succinic anhydride modified starch or plant protein,

wherein the container comprises a body and a cap,
to facilitate discharge of the food composition from the container.

### Detailed description

In the present invention, it was surprisingly found that oil in water emulsified food compositions using a plant protein or OSA-modified starch emulsifier could be discharged from a tottle-type container efficiently when the tottle comprises PP.

All percentages, unless otherwise stated, refer to the percentage by weight (wt%).

"Weight ratio" means that the concentration (wt%) of a first (class of) compound(s) is divided by the concentration (wt%) of a second (class of) compound(s) and multiplied by 100 in order to arrive at a percentage.

Except in the operating and comparative examples, or where otherwise explicitly indicated, all numbers in this description indicating amounts or ratios of material or conditions of reaction, physical properties of materials and/or use are to be understood as modified by the word "about".

Features described in the context of one aspect of the invention (for example, the use) can be applied in any other aspect of the invention (for example, the method).

### Tottle

The present invention relates to the use of a tottle type container.

It is typically most functional that the area of the tottle type container that is in contact with the food composition is polypropylene. A tottle wherein the innerwall is not coated therefore is preferred. The oil-in-water emulsified food composition contained in the tottle is not considered a coating here, as the skilled person understands. Accordingly, the tottle is preferably not coated with oil, or with oil containing monoglycerides of a fatty acid, sucrose fatty acid esters, sorbitan fatty acid esters or lecithin. No coating step of the inner surface of the tottle preferably is present before filling of the tottle with the oil-in-water emulsified food composition.

As known in the art, the wall of a tottle may comprise several layers. In the present invention the wall of the tottle body consists of polypropylene or consists of several material layers, wherein the inner layer is polypropylene, as this is the layer that is in contact with the emulsified food composition. It is more preferred, that the wall of the body of the tottle comprises an oxygen barrier layer. This oxygen barrier layer is preferably an ethylenevinylalcohol layer. The body of the tottle comprises preferably an inner layer of polypropylene, facing the packaged food composition, an outer layer of polypropylene, and an ethylenevinylalcohol layer positioned between them. In case protection from oxygen is less desired, a tottle wherein the body consists of polypropylene may be preferred.

It may be preferred that the cap of the tottle comprises polypropylene, preferably consists of polypropylene.

The polypropylene used in the wall of the tottle or in the cap can be virgin polypropylene or it can be preferred that the polypropylene comprises recycled polypropylene, or even more preferred that the polypropylene is recycled polypropylene.

The tottle type container typically comprises a spout, positioned inside of the cap. It is preferred, that the spout is prepared from polypropylene and is translucent or transparent.

The volume of the tottle is preferably of from 100 to 2500 ml, preferably of from 200 to 1000, and preferred sies can for example be of from 200 to 500, preferably of from 200 to 300 ml, or from 400 to 600 ml or from 600 to 900 ml and. The volume represents the amount of emulsified food composition that is present in the tottle after complete filling. This is understood as filled under standard industry norms and conditions, as known in the art.

### Emulsion

The composition of the first aspect of the invention is in the form of an oil-in-water emulsion and the process of the second aspect of the invention results in an oil-in-water emulsified food composition. Examples of oil-in-water emulsions encompassed by the present invention include semi-solid emulsified sauces, such as mayonnaise, and mayonnaise-like emulsions, hummus, aioli. Other semi-solid oil-in-water emulsified food composition include food concentrates in emulsified form which upon dilution with water (or aqueous products e.g. fruit or vegetable juices, vinegar, wine, etc.) give soups, sauces, or liquid dressings that can be in emulsified form. Preferably, the food composition is a mayonnaise or a mayonnaise-like product, such as a low-oil mayonnaise or egg-less mayonnaise.

Mayonnaise is generally known as a thick, creamy sauce that can be used as a condiment with other foods. Mayonnaise is a stable water-continuous emulsion of typically vegetable oil, egg yolk and either vinegar or lemon juice. In many countries the term mayonnaise may only be used in case the emulsion conforms to the "standard of identity", which defines the composition of a mayonnaise. For example, the standard of identity may define a minimum oil level, and a minimum egg yolk amount. However, in the present context, mayonnaise-like products having e.g. oil levels lower than defined in a standard of identity or not containing egg yolk are in the scope of the present invention. In the art, this kind of products may contain thickeners like starch to stabilise the aqueous phase. Mayonnaises and mayonnaise-like products may vary in colour, and are generally white, cream-coloured, or pale yellow. The texture may range from light creamy to thick. Generally, mayonnaise and mayonnaise-like products are semi-solid. Mayonnaises in the context of the present invention do not necessarily need to conform to a standard of identity in any country.

### Oil

The oil-in-water emulsified food composition according to the invention is preferably free from animal products and preferably a plant-based composition suitable for consumers that appreciate vegan products. Accordingly, the composition comprises vegetable oil. Vegetable oil is preferably present in an amount of from 5 to 82 wt%, preferably 10 to 80 wt%, preferably of from 15 to 78 wt%, even more preferably of from 65 to 78 wt%, based on the weight of the food composition. Animal derived fat, such as milkfat or butter is preferably absent from the composition.

Vegetable oil is known in the art, and includes oils derived from e.g. plants, such as from for example nuts or seeds from plants. In the context of this invention, 'vegetable oil' also includes oil from algae. Preferred oils for use in the context of this invention are vegetable oils which are liquid at 20 °C, preferably, which are liquid at 5°C. Preferably the oil comprises an oil selected from the group consisting of sunflower oil, rapeseed oil, olive oil, soybean oil, and combinations of these oils. Most preferred, the oil is soybean oil or rapeseed oil or sunflower oil.

### Water

The composition of the invention comprises water. The total amount of water in the composition is preferably of from 15 to 96 wt%, preferably of from 18 to 90 wt%, based on the weight of the composition. "Total amount of water" includes water originating from water-containing ingredients.

### Emulsifier

The composition of the invention is an oil-in-water emulsion. It comprises an oil-in-water emulsifier. The emulsifier is preferably present in an amount of from 0.1 to 15 wt%, preferably 0.1 to 12 wt%, even more preferably of from 0.3 to 5 wt%, based on the weight of the oil-in-water emulsion. The emulsifier serves to stably disperse oil droplets in the continuous aqueous phase of an oil-in-water emulsion.

The composition of the invention comprises octenyl succinic anhydride modified starch or plant protein as the emulsifier.

OSA-modified starch is European food additive E1450. OSA-modified starch is preferably present in an amount of from 0.3 to 5 wt%, preferably of from 0.5 to 2 wt%. This emulsifier is available commercially as for example N-creamer 46, ex Ingredion Inc. (Westchester, IL, USA).

Preferably plant protein is present in the composition in an amount of from 0.3 to 5 wt%, based on the weight of the composition. Preferably, the amount of plant protein is of between 0.5 and 2.5 wt%, preferably of between 0.7 and 1.5 wt%, based on the weight of the composition. An amount for example may be preferred of more than 0.5 wt%. An amount may be preferred of less than 1.1 wt%, based on the weight of the composition.

The plant protein is preferably selected from the group consisting of pulse protein, oil seed protein, potato protein and mixtures thereof. Preferably the plant protein is pulse or potato protein. Pulse is the family of *Fabaceae.*

Pulse protein is preferably selected from the group consisting of pea protein, lentil protein, chickpea protein, lupin protein, faba bean protein, soy protein and mixtures thereof. It can however be preferred that the composition does not comprise soy protein. More preferably, pulse protein is selected from the group consisting of pea protein, chickpea protein, lentil protein, soy protein and mixtures thereof. Even more preferably pulse protein is selected from the group consisting of pea protein, chickpea protein and mixtures thereof. Most preferred, the pulse protein is pea protein *(pisum sativum).* Pulse protein is preferably present in a total amount of from 0.01 to 2 wt%, more preferably in an amount of from 0.03 to 1.5 wt%, based on the weight of the oil in water emulsion.

Oil seed protein is preferably selected from the group consisting of rape seed protein, canola protein, sunflower protein, and mixtures thereof, preferably is rape seed protein.

Preferably, the plant protein is derived from one of the group consisting of soybeans, corn, pea, chickpea, canola, sunflower, sorghum, rice, faba, amaranth, potato, tapioca, arrowroot, canna, lupin, rape, wheat, oats, rye, barley, soy, potato, mung, algae, and mixtures thereof. More preferably, the emulsifier is plant protein and selected from the group consisting of potato protein, pea protein, chickpea protein, faba bean protein, sunflower protein, soy protein and mixtures thereof. Even more preferably, the protein is selected from the group consisting of soy or pea or faba bean or potato protein.

The composition preferably may comprise a source of such protein and the protein may be added in the form of source of protein, such as a protein isolate (e.g. the globulin fraction or albumin fraction or both), protein hydrolysate, protein concentrate, extract (like aquafaba), flour and combinations thereof.

More preferably, the emulsifier is selected from the group consisting of potato protein, algae protein, pulse proteins, OSA-modified starch and mixtures thereof. Proteinaceous emulsifier such as algae protein and pulse protein, are preferably present in a total amount of from 0.01 to 2 wt%, more preferably in an amount of from 0.03 to 1.5 wt%, based on the weight of the oil in water emulsion. Even more preferably, the emulsifier is selected from the group consisting of OSA-modified starch, pea protein, soybean protein, chickpea protein, lentil protein, fava bean, and mixtures thereof.

Most preferably, the emulsifier is OSA-modified starch. OSA-modified starch is preferably present in an amount of from 0.2 to 5 wt%, preferably from 0.5 to 2 wt%, based on the weight of the composition.

The composition of the invention is preferably free from egg-derived emulsifier, and preferably free from dairy protein. It is preferably free from egg yolk, enzyme-modified egg-yolk or egg-derived lecithin. It is preferably free from whey protein or casein. It is preferably free from monoglycerate. In this way a vegan oil-in-water emulsion can be created without ingredients from animal origin.

### Acid and pH

The composition of the invention preferably has a pH ranging from 2.5 to 7.5, preferably ranging from 3.5 to 6.5, preferably ranging from 3.5 to 4.5.

Preferably the composition of the invention has a total titratable acidity ranging from 0.03% to 3% by weight expressed as acetic acid, preferably from 0.05% to 2% by weight, preferably from 0.1% to 1% by weight.

Accordingly, the composition of the invention preferably comprises acidulant. Acidulant is preferably selected from the group consisting of acetic acid, citric acid, lactic acid, sorbic acid and mixtures thereof. The composition preferably comprises acetic acid. Acetic acid is preferably present in an amount of more than 50 wt%, more preferably more than 80 wt%, even more preferably more than 90 wt%, even more preferably more than 95 wt% based on the weight of the total amount of acid in the composition. The acetic acid may typically be added in the form of vinegar. Hence, the composition preferably comprises vinegar.

### Other ingredients

It may be preferred, that the composition of the invention contains additionally other ingredients than already specifically mentioned in here. For example, it may be preferred, that the composition contains plant material in the form of herbs and/or spices. In case such ingredients are present in the composition, then generally their total concentration is at least 0.1% by weight, and preferably maximally 10% by weight, preferably maximally 5% by weight.

The composition of the invention may comprise sugar. High levels are not desired. Sugar may be present in an amount of from 0.1 to 15 wt%, preferably of from 0.3 to 12 wt%, even more preferably of from 0.4 to 10 wt%, most preferably of from 0.5 to 8 wt%, based on the weight of the composition.

Total alkaline metal salt, preferably sodium chloride, may be present in an amount of from 0.1 to 5 wt%, preferably from 0.15 to 4 wt%, or more preferably of from 0.2 to 3 wt%, based on the weight of the composition.

The composition may comprise mustard, e.g. as a flavour compound. Mustard may be present for example in an amount of from 0.5 to 10 wt%, more preferably 1 to 9 wt%, even more preferably 2 to 8 wt%, even more preferably of from 3 to 7 wt%.

It can be preferred, that hydrocolloid texturisers apart from OSA-modified starch are present, such as for example xanthan gum or guar gum, or dietary fibers (e.g. citrus fibre). However, it is more preferred, that the food composition does not contain hydrocolloid texturiser other than the OSA modified starch. Preferably the composting is free from xanthan gum or guar gum, more preferably it is free from both. It may be preferred, that the OSA-modified starch is the only hydrocolloid texturiser in the food composition. It could however be preferred that starch-based texturiser is present, preferably selected from the group consisting of native starch, chemically modified starch or physically modified starch.

Accordingly, the composition may comprise preferably native starch, chemically modified starch or physically modified starch, more preferably native starch or physically modified starch, in an amount of from 0.1 to 10 wt%, preferably of from 1 to 5 wt%, more preferably of from 2 to 4 wt%, based on the weight of the water phase. The water phase includes all watersoluble components in the composition and the water. Native starch is starch that is not modified chemically or physically. Native starch or physically modified starch is preferably selected from the group consisting of corn starch, potato starch, tapioca starch, rice starch, wheat starch, pea starch and mixtures thereof. Preferably the non-modified starch or chemically modified starch or physically modified starch, preferably native starch or physically modified starch, is corn starch, potato starch, wheat starch, or rice starch. Even more preferably the non-modified starch, chemically modified starch or physically modified starch, preferably native starch or physically modified starch, is waxy corn starch, waxy wheat starch, waxy potato starch, or waxy rice starch. Most preferably, the non-modified starch, chemically or physically modified starch, preferably native starch or physically modified starch, is waxy corn or waxy rice starch. Native starch may preferably be added in the form of starch or flour.

The composition of the invention is a semi-solid. Such is known typically from traditional mayonnaise compositions with high oil level (e.g. 78% oil). The rheological properties of the composition can be expressed in Stevens Value (in grams) and/or as elastic property. The Stevens Value (in grams), especially for mayonnaise and mayonnaise -like compositions, is preferably from 80 g to 400 g, preferably of from 80 g to 200 g, even more preferably 100 g to 200 g, or even 100 g to 150 g, as measured at 20 °C. This is preferably assessed some time, e.g. a week, or 2 weeks, after production, when products are stabilized and typically on the shelf. It is in particular in the area of higher consistency (80-400 grams Stevens), that the present invention shows it further advantage regarding syneresis reduction while maintaining a smooth, non-sticky mouthfeel, as in liquid compositions this problem is not present, as the skilled person understands. The composition of the invention therefore preferably has a Stevens consistency of between 80 g and 400 g, more preferably of between 100 g and 200 g, and even more preferably of between 100 g and 150 g, as measured at 20 °C.

### Use

Tottle-type containers comprising PP and containing an oil-in-water emulsified food composition are known. It was surprisingly discovered by the present inventors, that an oil-in-water emulsified food composition which comprises an emulsifier comprising OSA-modified starch or plant protein could be satisfyingly discharged from the tottle when the tottle comprises polypropylene. It was discovered that the use of a PP-comprising tottle for the purpose of minimizing the residual amount of this specific emulsified food composition (i.e. using OSA starch or plant protein) after evacuation, and facilitating discharge of this specific product, was not realised yet in the art. The residues appeared to stick to the inside of the tottle to a much lesser extent than observed for the same composition in a PET tottle or in a PET tottle coated with oil or oil with lecithin, as are known in the art. To the best knowledge of the inventors, the use of a PP comprising tottle for the purpose to facilitate the discharge of this specific emulsified composition and to reduce the amount of residual composition sticking to the inner wall is not known.

In particular, it was observed, that the amount of residual composition after evacuating the tottle was less than 16 wt%, preferably less than 12 wt% of the initial product amount present in the tottle. This is measured by weighing the tottle at the start and at the end of the product evacuation test, and by deducing the empty packaging weight, the net product leftovers can be calculated and expressed as a weight percentage. Accordingly, the invention relates to the use according to the invention, wherein preferably the net product leftover residue of oil-in-water emulsified food composition after evacuating the tottle is less than 16 wt%, preferably less than 12 wt%, measured by weighing the full tottle and the tottle after evacuation of the tottle, and deducing the weight of the clean tottle, and expressing the left over as a weight percentage based on the weight of the oil-in-water emulsion in the full tottle.

In a further aspect, the present invention relates to a method of reducing the amount of left-over product in a tottle-type container, or facilitating discharge of product from a tottle type container, wherein the product is an oil-in-water-emulsified food composition comprising:
- vegetable oil,
- water,
- emulsifier comprising octenyl succinic anhydride modified starch or plant protein,

wherein the tottle comprises a body and a cap,
wherein the tottle-type container comprises polypropylene.

The method preferably comprises the steps of:
(i) identifying an oil-in-water emulsified food composition packaged in a tottle type container, wherein the composition comprises:
   - vegetable oil,
   - water,
   - emulsifier comprising octenyl succinic anhydride modified starch or plant protein, and
   the tottle comprises a body and a cap; and
(ii) replacing at least part of the material from which the tottle is manufactured with polypropylene, thereby improving discharge of the composition from the container.

The method preferably comprises the step of having the tottle filled up with product. The method preferably comprises the step of evacuating the tottle by opening the cap and squeezing the tottle several times, to allow the tottle to evacuate. It is clear that in this context the evacuation process may require more than one squeeze, and that the squeezing continues till no product is discharged from the tottle by squeezing. The net product leftover residue of oil-in-water emulsified food composition after evacuating the tottle comprising polypropylene is preferably less than 16 wt%, preferably less than 12 wt%. Preferably the composition identified in step (i) above has a net product leftover residue of oil-in-water emulsified food composition after evacuating the tottle of more than 16 wt%, more preferably more than 17 wt%.

Preferably the method comprises a step of labelling and/or associating the product with indications that the product has (a) optimal and/or improved discharge; and/or (b) minimal and/or reduced leftover residue. The indications are preferably displayed on a label applied to the tottle.

The consistency of compositions used in or in relation to the present invention preferably is of from 50 to 140 grams, preferably of from 70 to 120 grams.

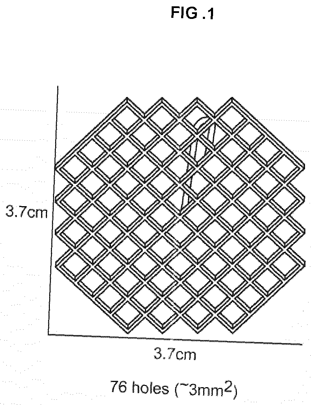

Consistency in the context of the present invention can be measured using Stevens value, which can be measured as follows:
Thickness - Stevens value: the Stevens value is determined at 20°C by using a Stevens LFRA Texture Analyser (ex Brookfield Viscometers Ltd., UK) with a maximum load/measuring range of 1000 grams, and applying a penetration test of 25 mm using a grid, at 2mm per second penetration rate, in a cup having a diameter of 65 mm, that contains the emulsion; wherein the grid comprises square openings of approximately 3x3 mm, is made up of wire with a thickness of approximately 1mm, and has a diameter of 40 mm. One end of a shaft is connected to the probe of the texture analyser, while the other end is connected to the middle of the grid. The grid is positioned on the flat upper surface of the emulsion in the cup. Upon starting the penetration test, the grid is slowly pushed downward into the emulsion by the texture analyser. The final force exerted on the probe is recorded, giving the Stevens value in gram. A drawing of the grid is given in Figure 1. The grid is made from stainless steel, and has 76 holes, each hole having a surface area of approximately 3x3 mm.

The invention will now be exemplified with the following, non-limiting examples.

### Examples

### Example 1

### Ingredients

Rapeseed oil (fully refined, not hydrogenated), water, spirit vinegar (10% HAc), sugar, salt, OSA-modified starch (N-creamer, supplier Ingredion), lemon juice concentrate (45 Brix), flavouring, calcium disodium EDTA.

### Method

An oil in water emulsified food composition was prepared using the above ingredients in the following amounts:

| **Ingredient** | **Amount [weight %]** |
|---|---|
| Rapeseed oil | 72 |
| Water | 17,2 |
| Spirit vinegar | 5 |
| Sugar | 2,7 |
| Salt | 1,5 |
| OSA-modified starch | 1,2 |
| Lemon juice concentrate | 0,2 |
| Flavouring | 0,2 |
| Calcium disodium EDTA | 0.007 |
| total | 100% |

The above-mentioned oil in water emulsified food composition was prepared by using a standard Food High Shear Emulsifier (Fryma Koruma). The equipment includes a stirred vessel to which vacuum can be applied. The vessel is equipped with an integrated colloid mill to produce an oil-in-water emulsion with a typical semi-solid mayonnaise consistency as well known in the art.

The process comprises the following steps:
- Dose water, vinegar, sugar, salt, lemon juice concentrate, calcium disodium EDTA,
- Stir until all dry materials are completely dissolved and the mix is fully homogeneous,
- Add the OSA-modified starch and homogenize the mix,
- Add the oil and flavouring, and pass the mix over the colloid mill until a typical mayonnaise consistency has been reached,
- Pump the mix to a buffer tank which is connected to the tottle filling machine,
- Fill and close the tottles. 407g of mayonnaise is dosed in a PET tottle with a nominal filling volume of 430ml. 433g of mayonnaise is dosed in a PP tottle with a nominal filling volume of 450ml.
- In case of coated PET tottles, a coating film is applied just before filling, with a surface coverage of about 0.002 g/cm², which can be suitably done as described for example in EP3237506B1.

The texture of the resulting compositions was measured as 93 g (product in PP bottle) and 103 g (product in PET bottles).

### Method to measure the reduction in leftovers:

After a minimum of two weeks maturation (at ambient, ca.20 °C), the product is expelled from the tottles in two steps:
1) Repeatedly squeeze the tottle without permanently deforming the tottle. This is done by gently shaking by hand until no reasonable amount of product (~5g) can be expelled and/or splattering occurs. The tottles are kept top down for 24hrs (at 4 to 8 °C)
2) After 24hrs, the cap is opened and the tottle is squeezed by hand without shaking until no more product can be expelled. Subsequently (to simulate consumer shaking), the tottle is banged (cap down) on the table from 10-centimeter height for 3 times and squeezed by hand until no more product can be expelled. This is repeated to a total of 5 times.

By weighing the tottle at the start and at the end of the product evacuation test, and by deducing the empty packaging weight, the net product leftovers can be calculated and expressed as a weight percentage.

### Results

| | Packaging | Leftovers (wt. %) | Phase separation |
|---|---|---|---|
| Ex 1 | PP | 9,6% | no |
| Comp 1 | PET | 18,9% | no |
| Comp 2 | PET, coated with vegetable oil film comprising lecithin | 3 to 4% | Yes, excessive oil separation, not acceptable |

### Conclusion Example 1

When the OSA-modified starch-emulsified composition is discharged from a PET tottle (comparative example 1), significant residue is maintained (18,9%). Applying an oil coating comprising lecithin, as suggested in the art, resulted in destruction of the composition (comparative example 2). The use of a PP tottle resulted in a significant reduction of left-over, almost 50%, illustrating the superiority of using a PP tottle for the purpose of facilitating discharge and of reducing residue after discharge.

### Example 2

In example 2 it has been assessed if coating the PET tottle with oil would result in a solution for the left-over problem.

### Ingredients

Rapeseed oil (fully refined, not hydrogenated), water, spirit vinegar (12% HAc), modified potato starch (amylose-free, supplier Royal Avebe U.A.), sugar, salt, OSA-modified starch (N-creamer, Ingredion), lemon juice concentrate (40 Brix), flavouring, sorbic acid, calcium disodium EDTA.

### Method

An oil in water emulsified food composition was prepared using the above ingredients in the following amounts:

| **Ingredient** | **Amount [weight %]** |
|---|---|
| Rapeseed oil | 53 |
| Water | 37,9 |
| Spirit vinegar | 2,4 |
| Potato starch | 1,9 |
| Sugar | 1,85 |
| Salt | 1,7 |
| OSA-modified starch | 0,75 |
| Lemon juice concentrate | 0,2 |
| Flavouring | 0,2 |
| Sorbic acid | 0,1 |
| Calcium disodium EDTA | 0.007 |
| Total | 100% |

The above-mentioned oil in water emulsified food composition was prepared by a process comprises the following steps:
- Oil phase preparation by dissolving the flavouring in the oil using a stirred tank
- Aqueous phase 1 preparation by dissolving sugar, salt, OSA-modified starch and Calcium disodium EDTA in part of the water [17% of 37.9%] using a stirred tank
- Aqueous phase 2 preparation by adding lemon juice concentrate, spirit vinegar, sorbic acid and potato starch to the remaining part of the water [20.9% of 37.9%] using a stirred tank
- Aqueous phase 2 pasteurization for 5 minutes at 72°C and subsequent cooled to 25°C
- Mixing the oil phase and aqueous phase 1 in a stirred vessel providing sufficient shear to prepare an oil-in-water emulsion
- Passing this oil-in-water emulsion through a colloid mill applying 10.000rpm
- Post-dosing aqueous phase 2 with the oil-in-water emulsion by using a dynamic mixer
- Passing the resulting oil-in-water emulsion through a colloid mill applying 2.000rpm
- Fill and close the tottles. 400g of mayonnaise is dosed in a tottle with a nominal filling volume of 430ml.
- In case of coated tottles, a coating film is applied just before filling (about 0.002 g/cm² on inner surface), which can be suitably done as described for example in EP3237506B1.

The final product is characterized by a Stevens value of 78, measured at 24 hours after production.

The same method as described in Example 1 was applied to determine the amount of product left-over.

### Results

| | Packaging | Leftovers (wt. %) | Phase separation |
|---|---|---|---|
| Comp 3 | PET | 20% | No |
| Comp 4 | PET, coated with vegetable oil film | 17% | No |

### Conclusion Example 2

The assessment shows that coating a PET tottle with vegetable oil (Comparative example 4) does not provide a major improvement in terms of reducing residue after discharge, compared to a non-coated PET tottle (comparative example 3), 17% vs. 20%, respectively. This indicates that coating a PET bottle with vegetable oil, a solution known in the art, is not solving the problem of significantly reducing left-over after discharge in case the product is an OSA-modified starch-emulsified food composition.

### Conclusion

When a polypropylene tottle is used to package an OSA-modified starch-emulsified oil-in-water emulsion, the amount of product left over after evacuation of the tottle is minimal compared to discharge-facilitating solutions used in the art. Coating using oil that comprises lecithin results in severe phase separation of the product. This illustrates, that the use of polypropylene comprising tottles to facilitate discharge and to reduce sticking of left over to the inner tottle wall after evacuation of the tottle is superior to other known solutions.

## Claims

1. Use of polypropylene in the manufacture of a tottle type container containing an oil-in-water-emulsified food composition comprising:
• vegetable oil,
• water,
• emulsifier comprising octenyl succinic anhydride modified starch or plant protein,
wherein the tottle comprises a body and a cap,
to facilitate discharge of the food composition from the container.

2. Use according to claim 1, to reduce sticking of the food composition to the inside of the container body and to facilitate discharge of the food composition from the container.

3. Use according to claim 1, wherein vegetable oil is present in an amount of from 5 to 82 wt%, preferably of from 10 to 80 wt%, more preferably from 15 to 78 wt%, even more preferably 65 to 78 wt%.

4. Use according to claim 1 or 2, wherein the emulsifier is octenyl succinic anhydride modified starch.

5. Use according to any one of the preceding claims, wherein the plant protein is pulse protein (preferably pea protein, lentil protein, chickpea protein or soy protein), potato protein, algal protein; preferably wherein the plant protein is pea protein or soy protein.

6. Use according to anyone of the preceding claims, wherein the composition is free from egg yolk, lecithin, whey protein, casein, monoglycerate, or mixtures thereof.

7. Use according to anyone of the preceding claims, wherein the area of the tottle type contianer that is in contact with the food composition is polypropylene.

8. Use according to anyone of the preceding claims, wherein the body of the tottle type container consists of polypropylene.

9. Use according to anyone of the preceding claims, wherein the cap and the body consist of polypropylene.

10. Use according to anyone of the preceding claims, wherein the inside of the body is not coated.

11. Use according to anyone of the preceding claims, wherein the body of the tottle comprises an oxygen barrier layer, preferably an ethylenevinylalcohol layer.

12. Use composition according to claim 11, wherein the body comprises an inner layer of polypropylene, facing the packaged food composition, an outer layer of polypropylene, and an ethylenevinylalcohol layer between them.

13. Use according to anyone of the preceding claims, wherein the tottle type container comprises a spout, positioned inside of the cap, and wherein the spout is prepared from polypropylene and is translucent or transparent.

14. Use according to any one of the preceding claims, wherein the net product leftover residue of oil-in-water emulsified food composition after evacuating the tottle is less than 16 wt%, preferably less than 12 wt%, measured by weighing the full tottle and the tottle after evacuation of the tottle, and deducing the weight of the clean tottle, and expressing the left over as a weight percentage based on the weight of the oil-in-water emulsion in the full tottle.

15. A method for facilitating the discharge of an oil-in-water-emulsified food composition from a tottle type container, the method comprising the steps of:
(i) identifying an oil-in-water emulsified food composition packaged in a tottle type container, wherein the composition comprises:
• vegetable oil,
• water,
• emulsifier comprising octenyl succinic anhydride modified starch or plant protein, and
the tottle comprises a body and a cap; and
(ii) replacing at least part of the material from which the tottle is manufactured with polypropylene, thereby improving discharge of the composition from the container.

## Patentansprüche

1. Verwendung von Polypropylen bei der Herstellung eines Behälters vom Tottle-Typ, der eine Öl-in-Wasser-emulgierte Lebensmittelzusammensetzung enthält, umfassend:
• Pflanzenöl,
• Wasser,
• Emulgator, der Octenylbernsteinsäureanhydrid-modifizierte Stärke oder Pflanzenprotein umfasst, wobei die Tottle einen Körper und eine Kappe umfasst, um die Entnahme der Lebensmittelzusammensetzung aus dem Behälter zu erleichtern.

2. Verwendung nach Anspruch 1, um das Anhaften der Lebensmittelzusammensetzung an der Innenseite des Behälterkörpers zu verringern und die Entnahme der Lebensmittelzusammensetzung aus dem Behälter zu erleichtern.

3. Verwendung nach Anspruch 1, wobei Pflanzenöl in einer Menge von 5 bis 82 Gew.-%, vorzugsweise von 10 bis 80 Gew.-%, bevorzugter von 15 bis 78 Gew.-%, noch bevorzugter von 65 bis 78 Gew.-% vorhanden ist.

4. Verwendung nach Anspruch 1 oder 2, wobei der Emulgator Octenylbernsteinsäureanhydrid-modifizierte Stärke ist.

5. Verwendung nach irgendeinem der vorhergehenden Ansprüche, wobei das Pflanzenprotein ein Hülsenfruchtprotein (vorzugsweise Erbsenprotein, Linsenprotein, Kichererbsenprotein oder Sojaprotein), Kartoffelprotein, Algenprotein ist, wobei das Pflanzenprotein vorzugsweise Erbsenprotein oder Sojaprotein ist.

6. Verwendung nach irgendeinem der vorhergehenden Ansprüche, wobei die Zusammensetzung frei von Eigelb, Lecithin, Molkenprotein, Kasein, Monoglycerat oder Mischungen davon ist.

7. Verwendung nach irgendeinem der vorhergehenden Ansprüche, wobei die Fläche des Behälters vom Tottle-Typ, die mit der Lebensmittelzusammensetzung in Kontakt steht, Polypropylen darstellt.

8. Verwendung nach irgendeinem der vorhergehenden Ansprüche, wobei der Körper des Behälters vom Tottle-Typ aus Polypropylen besteht.

9. Verwendung nach irgendeinem der vorhergehenden Ansprüche, wobei die Kappe und der Körper aus Polypropylen bestehen.

10. Verwendung nach irgendeinem der vorhergehenden Ansprüche, wobei die Innenseite des Körpers nicht beschichtet ist.

11. Verwendung nach irgendeinem der vorhergehenden Ansprüche, wobei der Körper der Tottle eine Sauerstoffbarriereschicht, vorzugsweise eine EthylenVinylalkohol-Schicht, umfasst.

12. Verwendung nach Anspruch 11, wobei der Körper eine innere Schicht aus Polypropylen, die der verpackten Lebensmittelzusammensetzung zugewandt ist, eine äußere Schicht aus Polypropylen und eine zwischen diesen liegende EthylenVinylalkohol-Schicht umfasst.

13. Verwendung nach irgendeinem der vorhergehenden Ansprüche, wobei der Behälter vom Tottle-Typ einen Auslauf umfasst, der innerhalb der Kappe positioniert ist, und wobei der Auslauf aus Polypropylen hergestellt und durchscheinend oder transparent ist.

14. Verwendung nach irgendeinem der vorhergehenden Ansprüche, wobei der Netto-Produkt-Restrückstand der Öl-in-Wasser-emulgierten Lebensmittelzusammensetzung nach dem Entleeren der Tottle weniger als 16 Gew.-%, vorzugsweise weniger als 12 Gew.-%, beträgt, gemessen durch Wiegen der vollen Tottle und der Tottle nach dem Entleeren der Tottle und Abziehen des Gewichts der sauberen Tottle, und wobei der Rest als Gewichtsprozentanteil, bezogen auf das Gewicht der Öl-in-Wasser-Emulsion in der vollen Tottle, ausgedrückt wird.

15. Verfahren zur Erleichterung der Entnahme einer Öl-in-Wasser-emulgierten Lebensmittelzusammensetzung aus einem Behälter vom Tottle-Typ, wobei das Verfahren die folgenden Schritte umfasst:
(i) Identifizieren einer in einem Behälter vom Tottle-Typ verpackten Öl-in-Wasser-emulgierten Lebensmittelzusammensetzung, wobei die Zusammensetzung umfasst:
• Pflanzenöl,
• Wasser,
• Emulgator, der Octenylbernsteinsäureanhydrid-modifizierte Stärke oder Pflanzenprotein umfasst, und
der Tottle einen Körper und eine Kappe umfasst; und
(ii) Ersatz mindestens eines Teils des Materials, aus dem die Tottle hergestellt ist, durch Polypropylen, wodurch die Abgabe der Zusammensetzung aus dem Behälter verbessert wird.

## Revendications

1. Utilisation de polypropylène dans la fabrication d'un récipient de type flacon souple contenant une composition alimentaire émulsionnée huile dans l'eau comprenant :
• une huile végétale,
• de l'eau,
• un émulsifiant comprenant un amidon modifié avec de l'anhydride octénylsuccinique ou une protéine végétale,
dans laquelle le flacon souple comprend un corps et un bouchon,
pour faciliter l'écoulement de la composition alimentaire hors du récipient.

2. Utilisation selon la revendication 1, pour réduire l'adhérence de la composition alimentaire à l'intérieur du corps de récipient et pour faciliter l'écoulement de la composition alimentaire hors du récipient.

3. Utilisation selon la revendication 1, dans laquelle l'huile végétale est présente en une quantité de 5 et 82 % en poids, de préférence de 10 à 80 % en poids, plus préférablement de 15 à 78 % en poids, encore plus préférablement de 65 à 78 % en poids.

4. Utilisation selon la revendication 1 ou 2, dans laquelle l'émulsifiant est de l'amidon modifié avec de l'anhydride octénylsuccinique.

5. Utilisation selon l'une quelconque des revendications précédentes, dans laquelle la protéine végétale est une protéine de légumineuse (de préférence une protéine de pois, une protéine de lentille, une protéine de pois chiche ou une protéine de soja), une protéine de pomme de terre ou une protéine d'algue ; de préférence, dans laquelle la protéine végétale est une protéine de pois ou une protéine de soja.

6. Utilisation selon l'une quelconque des revendications précédentes, dans laquelle la composition est exempte de jaune d'œuf, de lécithine, de protéine de lactosérum, de caséine, de monoglycérate ou de mélanges de ceux-ci.

7. Utilisation selon l'une quelconque des revendications précédentes, dans laquelle la surface du récipient de type flacon souple qui est en contact avec la composition alimentaire est du polypropylène.

8. Utilisation selon l'une quelconque des revendications précédentes, dans laquelle le corps du récipient de type flacon souple se compose de polypropylène.

9. Utilisation selon l'une quelconque des revendications précédentes, dans laquelle le bouchon et le corps se composent de polypropylène.

10. Utilisation selon l'une quelconque des revendications précédentes, dans laquelle l'intérieur du corps n'est pas enduit.

11. Utilisation selon l'une quelconque des revendications précédentes, dans laquelle le corps du flacon souple comprend une couche barrière à l'oxygène, de préférence une couche d'alcool éthylène-vinylique.

12. Utilisation selon la revendication 11, dans laquelle le corps comprend une couche interne de polypropylène, faisant face à la composition alimentaire emballée, une couche externe de polypropylène et une couche d'alcool éthylène-vinylique entre les deux.

13. Utilisation selon l'une quelconque des revendications précédentes, dans laquelle le récipient de type flacon souple comprend un bec verseur, positionné à l'intérieur du bouchon, et dans laquelle le bec verseur est préparé à partir de polypropylène et est translucide ou transparent.

14. Utilisation selon l'une quelconque des revendications précédentes, dans laquelle le résidu net de produit restant de composition alimentaire émulsionnée huile dans l'eau après extraction du flacon souple est inférieur à 16 % en poids, de préférence inférieur à 12 % en poids, mesuré en pesant le flacon souple plein et le flacon souple après extraction hors du flacon souple, et en soustrayant le poids du flacon souple propre, et en exprimant le résidu restant sous forme de pourcentage en poids en se basant sur le poids de l'émulsion huile dans l'eau dans le flacon souple plein.

15. Procédé permettant de faciliter l'écoulement d'une composition alimentaire émulsionnée huile dans l'eau hors d'un récipient de type flacon souple, le procédé comprenant les étapes consistant à :
(i) identifier une composition alimentaire émulsionnée huile dans l'eau emballée dans un récipient de type flacon souple, la composition comprenant :
• une huile végétale,
• de l'eau,
• un émulsifiant comprenant un amidon modifié avec de l'anhydride octénylsuccinique ou une protéine végétale, et
le flacon souple comprend un corps et un bouchon ; et
(ii) remplacer au moins en partie le matériau à partir duquel le flacon souple est fabriqué par du polypropylène, améliorant ainsi l'écoulement de la composition hors du récipient.
